# EUROPEAN PATENT SPECIFICATION

(11) **EP 2 612 081 B1**
(45) Date of publication and mention of the grant of the patent: **20.08.2014**
(21) Application number: 11754648.1
(22) Date of filing: 02.09.2011
(51) Int. Cl.: F24J 2/46

(54) **APPARATUS AND METHOD FOR REMOVING DUST AND OTHER PARTICULATE CONTAMINANTS FROM A DEVICE FOR COLLECTING SOLAR RADIATION**
VORRICHTUNG UND VERFAHREN ZUR ENTFERNUNG VON STAUB UND ANDEREN PARTIKELFÖRMIGEN SCHMUTZSTOFFEN AUS EINER VORRICHTUNG ZUR ENERGIEGEWINNUNG AUS SONNENSTRAHLUNG
APPAREIL ET PROCÉDÉ POUR ÉLIMINER LA POUSSIÈRE ET D'AUTRES CONTAMINANTS PARTICULAIRES D'UN DISPOSITIF AFIN DE COLLECTER LE RAYONNEMENT SOLAIRE

(30) Priority: 03.09.2010 DE 102010044311
(43) Date of publication of application: 10.07.2013
(73) Proprietor: Fraunhofer Gesellschaft zur Förderung der angewandten Forschung E.V., 80686 München (DE)
(72) Inventor: ROGALLA, Sönke, 79106 Freiburg (DE); BURGER, Bruno, 79110 Freiburg (DE); HOPF, Boris, 88316 Insy (DE); BIRYUKOV, Sergey, Be'er Sheva (IL)
(74) Representative: Zimmermann, Tankred Klaus
(86) International application number: PCT/EP2011/065185
(87) International publication number: WO 2012/028712

(56) References cited:
- WO-A1-96/38311
- US-A- 3 970 905
- US-A1- 2004 055 632

## Description

Embodiments of the present invention relate to the field of solar energy generation, more specifically to an approach for avoiding or reducing a contamination of solar collectors by undesired particles, e.g. dust or other contaminants. More specifically, embodiments of the invention relate to an apparatus and to a method that allow removing undesired particles from a surface of solar radiation collecting devices.

The contamination of devices for collecting solar radiation by airborne dust or other undesired particles is a severe problem for solar energy generation. The efficiency of solar devices will greatly degrade by the deposition of such particles as they reduce the amount of light that is able to reach the solar radiation collecting element. The accumulation of dust or other undesired particles (in the following referred to as "dust" or "dust particles") on photovoltaic panels and optical windows of CPV systems, on concentrating mirrors and pipe-lines of solar thermal power plants and other types of solar collectors and receivers causes losses due to the absorption, reflection or scattering of light. The reduction of energy yield may be very high, approaching 50% and more, depending on the location and the technology. For very large areas of solar collectors the degradation of their optical properties may become practically irreversible without regular cleaning, due to the process, known as "soiling" (the phenomenon of surface mineralization, caused by interaction of dust particles with water - for example, dew - on surface). The best zones on the earth for placing solar energy generators are the arid or semi-arid regions, because of the high amount of irradiation, however, unfortunately these regions are also the zones with the highest average concentration of dust and with the highest frequency of dust storms. Naturally, also in other regions of the earth dust may accumulate on a surface of a solar panel reducing the energy yield. The accumulation of dust on solar collectors has a negative impact on the economy of solar energy production. Therefore, approaches are needed for removing or avoiding the contamination of the surfaces of solar collectors by dust particles.

One conventional approach is to clean the surfaces of the solar collectors on a regular basis using water and/or mechanical elements like brushes. However, water is a scarce and very expensive resource, especially in the above mentioned regions where solar collectors show the best efficiency. Brushes are also not desirable as they may lead to damages on the surfaces of the solar collectors, for example by scratches or the like, again reducing the efficiency. Also, problems with the warranty may result. In addition, such conventional methods need energy for generating demineralized water which is needed for cleaning the solar panels for avoiding the deposition of minerals in the water on the surface. Further, to keep very large collector areas clean and thereby power losses on an acceptable level, a large amount of man power and time is required.

Therefore, in the art further techniques were researched for allowing the removal of dust from surfaces of solar collectors. One approach is a non-contact method which is based on the application of an electrical field to the surface of the solar collector.

As far as it is known to the inventors, the first patent directly related to the application of electric field for protection of solar collector surfaces was registered in Israel in 1999 (see Israeli Patent No 116489 "Method and Apparatus for Dust Removal from Surfaces", granted August 17, 1999 - see also US Patent 6,076,216 A, "Apparatus for Dust Removal from Surfaces" of June 20, 2000). In this patent a method for removal of dust from dielectric surface of solar collector by means of high voltage (HV) electric field is described. Different geometries of surfaces and of electrodes systems on them have been considered. A variety of schemes for feeding of the electrodes by HV potential have been considered as well. The predecessor of these patents was the "Electric Curtain" system, suggested by S. Masuda for the transportation of particulate materials (see Masuda, S., Fujibayashi, K., Ishida, K. and Inaba, H. (1972), Confinement and transportation of charged aerosol clouds via electric curtain, Electrical Engineering in Japan, 92: pages 43-52, doi: 10.1002/eej.4390920106). The feeding of parallel electrodes in the Masuda's system was organized in 0-, 1-, 2-, 3- etc. phase modes, as a traveling wave. The same system, called "Electrodynamic Screen", was later presented by US 2004/0055632 Al (see also the article "Self-Cleaning Solar Panels..." by Larry Greenmeier of August 22, 2010 in "Scientific American"), where a semi-conductor coating of the surface was suggested.

However, these approaches using traveling waves are disadvantageous as they require a complicated control structure and power supply element for allowing the generation of the traveling wave along the surface of a transparent thin film holding the electrodes, which is required for causing the tribocharging of initially uncharged particles. Further, the chemical composition of the transparent film must be such that the electrostatic charges left on it have a leakage path to ground through the film surface and, in addition, the film must have a sufficiently high resistivity so that the electrical field can penetrate and provide particle transport. Thus, not only the control circuitry is quite costly, but such approaches are also limited to specific materials which add to the overall costs of the solar collector. Implementing such an approach requires a re-design at least of a part of the photovoltaic panel.

It is an object underlying the present invention to provide an improved approach for allowing the removal of undesired particles, like dust or other particulate contaminants from a device for collecting solar radiation.

This object is achieved by a device according to claim 1 and by a method according to claim 13.

Further advantageous embodiments of the invention are defined in claims 2-12, 14 and 15.

In accordance with the inventive approach the problems associated with the prior art described above are avoided. More specifically, a contactless approach for cleaning the surfaces of solar radiation collecting devices, like photovoltaic cells, solar collectors or mirrors for solar thermal power plants, is provided. However, other than the prior art approaches known in the art and using contactless methods on the basis of electrical fields, which require very specific power supplies and control methods as well as very specific materials for the shields, the inventive approach provides a simplified solution which does not require specific control elements or specific materials, rather materials already used in existing solar collectors may be maintained and conventional power supplies without specific controls are feasible. More specifically, contrary to the prior art approaches and in accordance with the inventive approach, no "traveling wave" is used, rather the inventive approach of preventing dust accumulation and removing dust from surfaces of solar collectors, for example from a dielectric surface like a glass plate, is achieved by applying an electrical field between two electrodes. By means of the electrical field the dust particles are released from the surface and removed by electrostatic force and, in addition, by external influences like wind or gravity. The electrical field is generated by applying an electrical voltage between two electrodes, wherein in accordance with embodiments of the invention one electrode is formed by conductive traces in a layer arranged above and covering at least in part the solar radiation collecting element, like for example one or more solar cells or a reflective layer of a solar collector or mirror. The counter electrode is formed by the solar radiation collecting device itself, for example by the conductive elements (like terminals and conductors) provided for each solar cell anyway, or by the reflective layer of the solar collector or the mirror which is formed of a conductive material. Thus, other than in the prior art approaches, there is no traveling wave generated by the electrodes provided in the shield or in the layer covering the surface of the solar cells, rather an electrical field, preferably a high voltage electrical field, is applied between two electrodes, namely the first electrode formed by the plurality of conductive traces in the layer covering the solar cell, and the second electrode formed by the plurality of conductive elements inside the device for collecting the solar radiation.

Between these two electrodes a suitable power supply may be provided for applying the desired voltage so that except for providing this additional power supply and providing additional traces for defining the first electrode in the layer covering the solar radiation collecting element no further modification of an existing apparatus is needed. Thus, the inventive approach provides for an easy to implement and less costly way of providing for a reliable removal of dust from surfaces of solar collectors.

In accordance with embodiments, the electrical field may be generated by a voltage that may either be a DC voltage or an AC voltage with any desired wave form. In accordance with embodiments, a rectangular wave form, a sine wave form or a trapezoidal wave form is used having a frequency and a voltage amplitude in the ranges as mentioned above. In general, any wave form having positive and negative pulses with arbitrary rising and falling slopes and arbitrary width and pauses may be used. In accordance with embodiments a trapezoidal wave form is used as a compromise between the rectangular wave form and the sine wave form. While steep edges in the signal (as provided by the rectangular wave form) are desired for a fast change of the electrical field, this may result in electromagnetic interference (EMI) problems upon switching. This may be resolved using a sine wave form, however, no fast change of the field can be achieved. Therefore, as mentioned the trapezoidal wave form is used since it has edges not as steep as the rectangular wave form, thereby reducing possible EMI problems, but steeper than the sine wave form, thereby still allowing for a sufficiently fast change of the field. The electrode and the counter electrode can either be arranged on, above, inside or beneath the surface of the layer covering the solar cells, wherein one electrode is directly attached to the surface to be cleaned or is placed at least closely above or beneath the surface. The geometries and arrangements of the electrodes can be freely selected. The electrodes can be made of any conductive material. In accordance with embodiments, string or grid electrodes with fine conductors are used and, in accordance with further embodiments, a specific structuring of the electrodes may be applied in order to achieve a concentration of the electrical field which may be beneficial in certain environments.

In accordance with embodiments the conductive traces may be spaced apart from each other by a distance of more than 1mm and less than 10cm. Embodiments provide the traces with a distance of about 1 cm.

Embodiments of the present invention will now be described with reference to the accompanying drawings, in which:
- Fig. 1: shows an apparatus for removing dust from a surface of a photovoltaic panel in accordance with an embodiment of the invention;
- Fig. 2: shows a similar device as in Fig. 1, except the conductive traces are arranged as a grid;
- Fig. 3: shows a self-cleaning mechanism for a CPV panel in accordance with a further embodiment of the invention;
- Fig. 4: shows a schematic representation of a solar collector or mirror in accordance with a further embodiment of the invention;
- Fig. 5: shows an electrode structure having additional conductive traces forming a further electrode in accordance with an embodiment of the invention;
- Fig. 6(a)-(c): show different configurations of two electrodes in accordance with embodiments of the invention;
- Fig. 7(a)-(d): show different configurations of three electrodes in accordance with embodiments of the invention; and
- Fig. 8(a)-(d): show different configurations of three electrodes in accordance with further embodiments of the invention.

In the subsequent description of embodiments of the invention, in the figures, similar or identical elements will be referred to by the same reference numbers. Further, in the following description the undesired particles will be called by the joint term "dust".

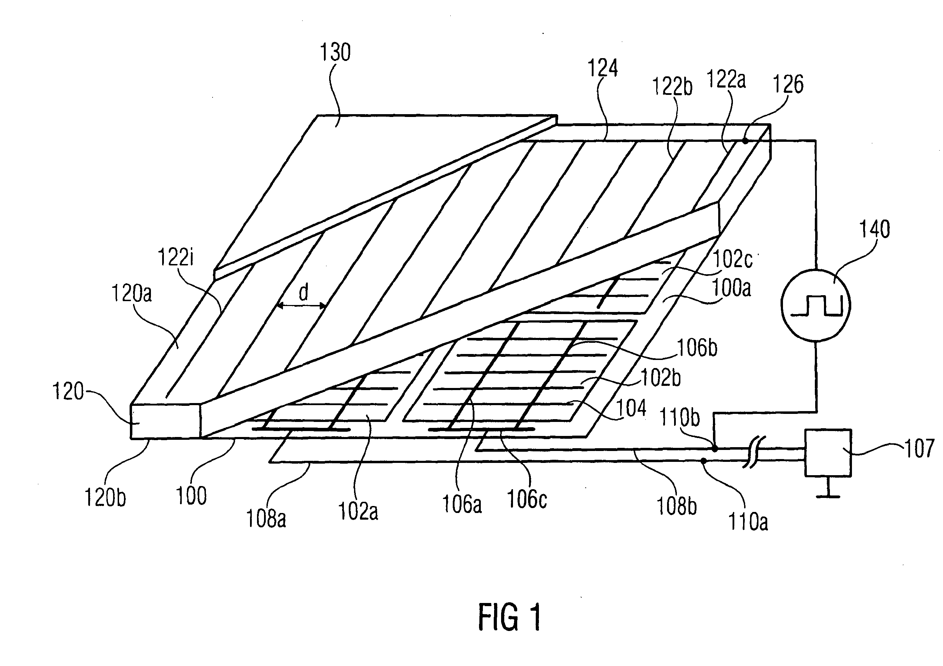

Fig. 1 shows an apparatus for removing dust from a surface of a photovoltaic cell in accordance with an embodiment of the invention. Fig. 1 shows a photovoltaic panel 100 comprising a plurality of photovoltaic cells 102a to 102c. The photovoltaic cells 102a to 102c are arranged in a plurality of strings which are schematically represented by reference sign 104 (for clarity reasons only one of the strings 104 is provided with a reference sign in the drawing). Each of the photovoltaic cells 102a to 102c comprises a plurality of conductors 106a, 106b for connecting respective strings 104 in the cells. The conductors 106a, 106b are connected to a common conductor 106c. The respective common conductors 106c are connected to respective terminals 110a, 110b of the panel 100 via conductors 108a, 108b. By means of the conductors 106 and 108 the actual energy generated by the respective conversion elements of the strings 104, namely electrical energy provided by converting the received solar radiation, is output from the panel 100 at the terminals 110a, 110b. Power electronics 107 are coupled to the terminals 110a and 110b. The power electronics 107 may comprise the necessary elements like an inverter, a DC/DC transducer and the like for providing AC power to be fed into a power grid or for driving a load.

Further, the device shown in Fig. 1 comprises a layer 120 that is placed on the panel 100 and is provided for protecting the photovoltaic cells 102a to 102c from the environment. The protective layer 120 is formed of a material transparent to the radiation to be received by the respective elements of the photovoltaic cells 102a to 102c, for example the protective layer 120 may be formed of a dielectric material, like a glass plate or the like. In addition, the protective layer 120 comprises a plurality of conductive traces 122a to 122e that, in accordance with the embodiment of Fig. 1, are arranged in parallel with each other, wherein the conductive traces 122 may have a uniform or constant spacing "d" therebetween. The conductive traces 122 are connected at one end with a common conductor 124 that is connected to a main terminal or contact 126, at which a voltage may be applied to the conductive traces 122 and 124. In the embodiment shown in Fig. 1, the traces 122 are arranged so as to extend in the same direction as the respective conductors 106 of the photovoltaic cells 102a to 102c of the panel 100. It is noted that embodiments of the invention are not limited to this implementation, rather the traces 122 may be arranged so as to extend in a direction perpendicular to the direction along which the conductors 106 of the panel 100 extend. The traces may also be arranged such that the direction in which they extend is under an angle different from 90° and different from 0° with respect to the traces 106.

The device shown in Fig. 1 further comprises a cover 130 that is placed on an upper surface 120a of the layer 120. The cover 130 may be provided to protect the conductors from the environment. Also, the cover 130 is provided to avoid dust particles from reaching the conductive traces as it is was found out that it is easier to remove the particles from the surface of the cover than from the conductive traces. The cover 130 is provided in case the traces 122 and 124 are provided on the upper surface 120a of the layer 120. In case the conductive traces 122 are embedded inside the layer 120 the cover 130 may be omitted. The layer 120 is placed on the panel 100 such that its lower surface 120b contacts an upper surface 100a of the panel 100. Embodiments of the invention may provide the cover in such a way that the traces 122 and 124 are on its lower surface 120b. In this case, an isolating and transparent layer needs to be provided between the layer 120 and the panel 100.

In addition, the device shown in Fig. 1 comprises a power supply 140 that is coupled between one or more of the contacts or terminals 110a, 110b of the panel 100 (in Fig. 1 it is connected to terminal 110b) and the contact or terminal 126 of the layer 120. The power supply 140 is provided for applying a DC voltage or an AC voltage between the terminals 110 and 126, thereby generating a high voltage electrical field between a first electrode and a second electrode. More specifically, the first electrode is formed by the plurality of conductive traces 122 and 124 formed in the layer 120. The second or counter electrode needed for generating the high voltage electrical field across the surface of the layer 120, in accordance with embodiments of the invention, is provided by at least a part or all of the photovoltaic panel 100 itself, namely by the respective lines or contacts 106 and 108 provided in the panel 100 for contacting the respective cells for guiding the electrical power generated by the converter cells 104 to the output terminals or output contacts 110a, 110b. In accordance with the invention, it was found that it is possible to use these already existing conductive traces as second or counter electrode for generating the electrical field and that there is substantially no negative impact on the efficiency or output of electrical energy from the solar panel.

Thus, except for providing the power supply 140 and for providing the further conductive traces in the layer 120, no modification of the conventional device including the panel 100 and the cover 120 is needed for implementing the inventive approach of removing dust from a photovoltaic panel.

In accordance with embodiments, an AC voltage may be provided which may be applied to avoid electrostatic charging of the dielectric surface of the panel. The voltage generator may generate an AC high voltage at a frequency of more than 0 Hz and less than 10 kHz, in accordance with embodiments the frequency is below 1 kHz or below 100 Hz. The amplitude of the AC high voltage may be more than 500 V and less than 20 kV, in accordance with embodiments the voltage is below 10 kV.

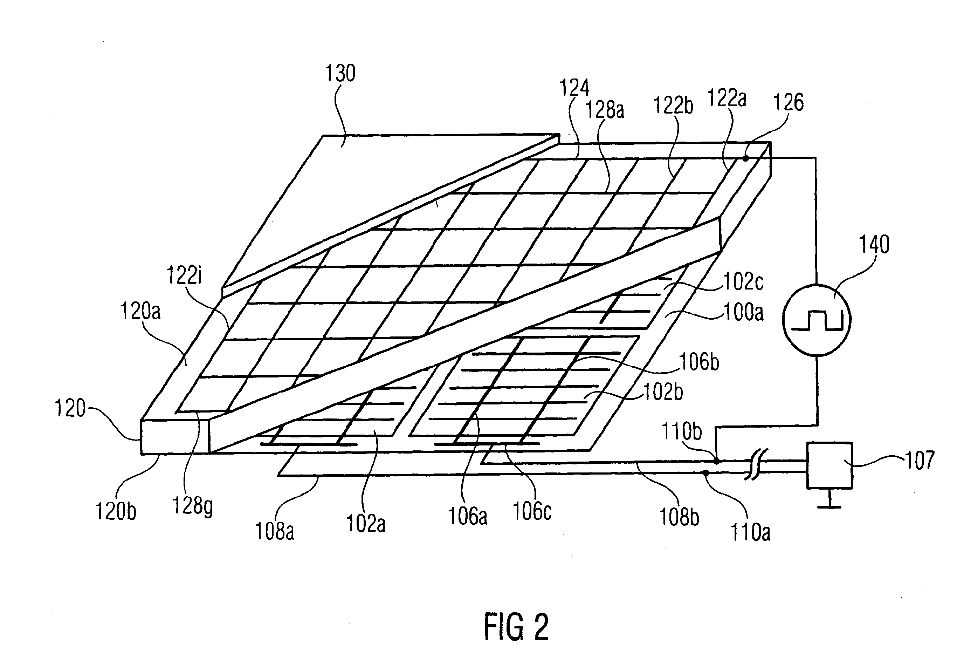

In Fig. 1, it was described that the conductive traces 122 of the layer 120 are arranged in parallel, however the invention is not limited to such embodiments. Rather, a grid of conductive traces may also be provided. Such an embodiment is depicted in Fig. 2, showing a similar device as in Fig. 1, except that the layer 120 comprises conductive traces arranged as a grid. More specifically, further traces 128a to 128e are provided to form the grid shown in Fig. 2. The traces 122 and 126 are connected with each other.

Thus, in accordance with the embodiments shown in Figs. 1 and 2, and in accordance with the inventive approach, the internal contacts 106 of the solar cells 102 are used as an electrode. In addition or alternatively, in accordance with other embodiments other conductive structures like parts of a mounting construction or the frame of the panel may be used as an electrode. In addition to the electrode already existing in conventional cells, a further electrode is placed on, above or beneath the surface of the overall device as is depicted in Figs. 1 or 2, for example by printing the conductive traces 122 and/or 126 directly on the protective layer 120 formed on the panel 100. The cover 130 may be provided to avoid an exposed electrode and allows for protection of the electrode against contact and for the prevention of corrosion thereof. The cover 130 may be formed of the thin layer of glass or a plastic material. As to the electrodes formed by the traces mentioned above, any polarity is possible and one of the electrodes may be grounded.

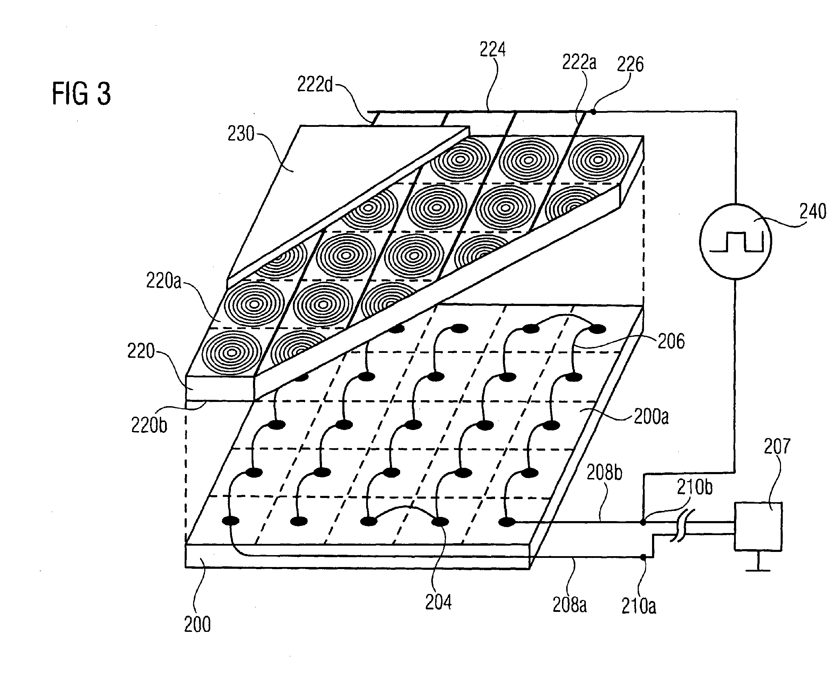

Fig. 3 shows a self-cleaning mechanism for a CPV panel in accordance with a further embodiment of the invention (CPV = concentrating photovoltaic). The panel 200 comprises a plurality of solar cells 204 and a plurality of conductors 206 for connecting respective groups of solar cells 204 in series. Each group is connected to a common contact or output terminal 210a, 210b via a respective conductor 208a, 208b. Again, via the conductors 206, 208a, 208b the electrical power generated by converting the solar energy is fed from the respective solar cells to the output 210a, 210b for further processing. The concentrating photovoltaic panel further comprises a layer 230 including an array of optical lenses 231. The layer 230 is mounted at a predefined distance from an upper surface 200a of the panel 200 so that by means of the lenses 231 radiation received by the device is concentrated onto the respective solar cells 204 associated with the respective lenses 231. Further, the layer 230 comprising the array of lenses 231 comprises the conductive traces 222a to 222d that extend between the lenses 231. In the depicted embodiment the lenses have a dimension of 4cm x 4cm so that the traces do not need to cross the lenses. However, in case a narrower spacing is desired or in case the dimension of the lenses is larger, the traces may also provided such that the lenses are crossed. The traces are coupled to a common conductor 224 that is connected to a contact 226. In a similar way as described above with regard to Fig. 1 a power supply 240 is provided that is coupled between the terminals 210b and 226 for applying an electrical field between the two electrodes formed by the conductors 206 and the conductors 222, respectively. One electrode is formed by the additional traces 222 provided in the layer 230, whereas a counter electrode is formed by at least a part of the already existing electrodes or conductors 206, 208a, 208b of the panel 200. The traces 222 may be provided on a top surface 220a or on a bottom surface 220b of the layer 220. A cover 230 may also be provided. The traces 222 may also be provided inside the layer 220. While Fig. 3 shows an embodiment in accordance with which the traces 222 extend in a direction perpendicular to the extension of the conductors 206 in the panel 200 the traces 222 may be arranged to extend in the same direction as the traces 206. Also, a grid of traces in a similar way as shown in Fig. 2 may be provided in the layer 220.

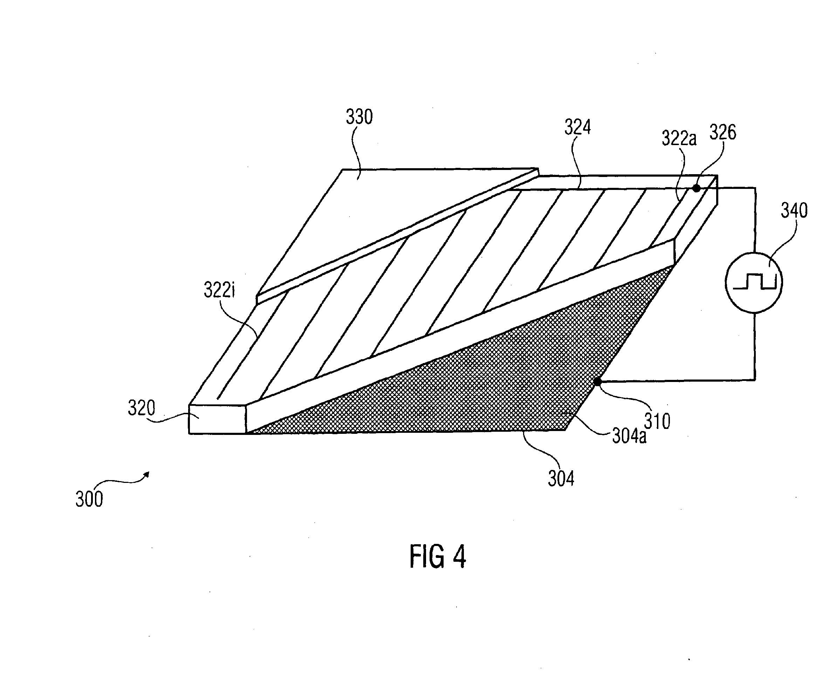

With regard to Figs. 1 to 3, embodiments of the invention were described in the context of photovoltaic cells, however, the invention is not limited to such solar radiation collecting elements. Besides photovoltaic cells, solar thermal power plants exist using solar collectors or mirrors. Also in such implementations it is required to keep a surface of the solar collector or mirror clean to maintain the efficiency. Fig. 4 shows a schematic representation of a solar collector or mirror 300. The mirror 300 comprises a reflective layer 304 that is formed of a conductive material and a top surface 304a of which is covered by a protective layer 320. The layer 320 is similar to the layer 120 described above and comprises a plurality of conductive traces 322a to 322i coupled to a common trace 324, which is coupled to a contact or terminal 326. The layer 320 may be covered by a protective cover 330. Besides the shown configuration of the traces 322, any other of the above described configurations may be applied. As can be seen from Fig. 4, the conductive, reflective layer 304 comprises a terminal or a contact 310. Further, a power supply 340 is provided that is coupled between the contacts 310 and 326 for applying a desired voltage between the reflective layer 304 acting as a counter electrode and the electrode formed by the respective traces 322 and 324. Thus, in the same way as outlined above, in such solar collector devices also only minor changes are necessary for implementing the inventive approach, because the counter electrode needed for generating the high voltage electrical field is formed by the already existing elements of the solar collecting element itself, namely the conductive and reflective element 304.

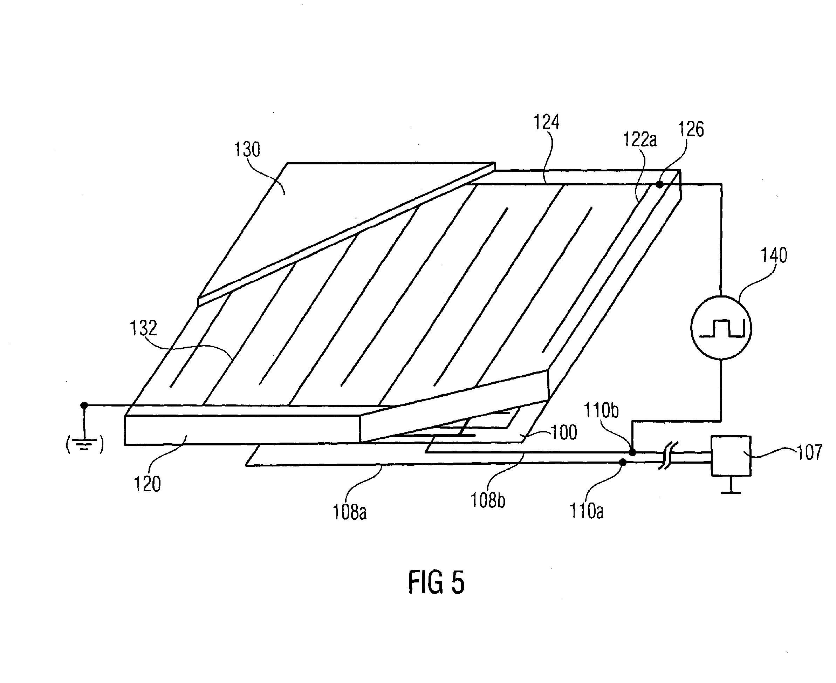

Fig. 5 is a schematic representation of the device of Fig. 1 and shows an electrode structure in accordance with a further embodiment of the invention. In addition to the conductive traces 122 shown in Fig. 1, further conductive traces 132 are provided on or in the layer (not shown in Fig. 5). The conductive traces 122 and 132 are arranged in an interdigital pattern, wherein the additional traces 132 may be connected to ground or to another reference potential. Also the panel 100 may be connected to ground or to another reference potential. The additional traces 132 and the panel 100 may be connected to the same or to different reference potentials. Providing the additional traces and thereby an additional electrode structure supports the field generation and the removal of the undesired particles. It is noted that instead of the interdigital arrangement of the traces 122 and 132 also other arrangements of the traces with respect to each other are possible. It is noted that also other patterns than interdigital patterns are possible. Naturally, a third electrode may also be provided in the embodiments shown in Fig. 3 and in Fig. 4.

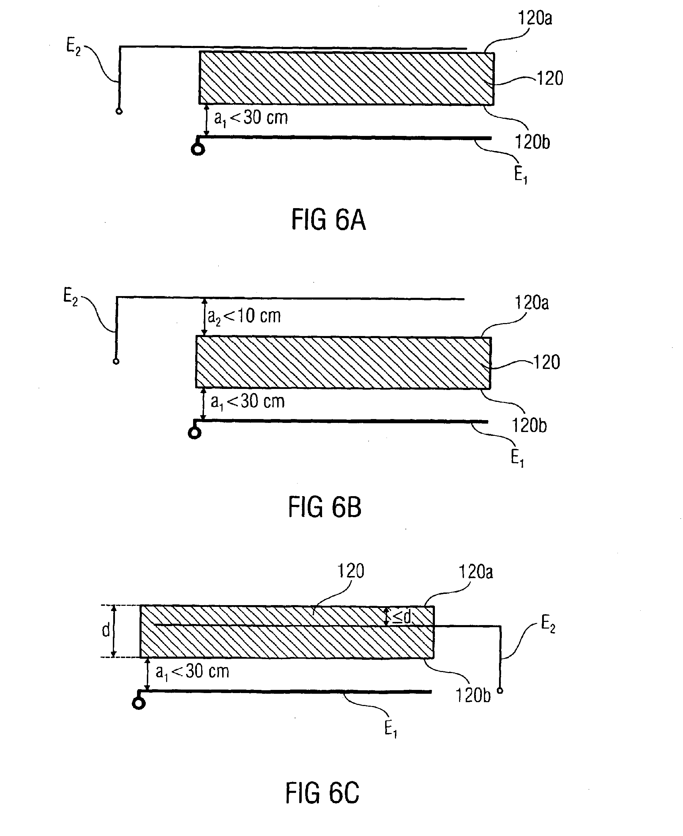

In the following possible configurations of the electrodes in accordance with embodiments of the invention will be described. Fig. 6 to 8 only include schematic representations showing a first electrode E₁ which is the electrode formed by at least a part of the solar radiation collection device. Second and third electrodes E₂ and E₃ (formed by the traces described above) are shown, of which one is connected to the HV signal, and of which the other is connected to a fixed potential.

Fig. 6(a)-(c) show different configurations of two electrodes in accordance with embodiments of the invention. In the embodiment of Fig. 6(a) the protective layer 120 is arranged such that there is a distance a₁ between the solar radiation collection device (the first electrode E₁) and the surface 120b of the protective layer 120 which faces the solar radiation collection device. In accordance with the depicted embodiment the distance a₁ is less than 30cm. In accordance with other embodiments, however, the distance a₁ may also be more than 30 cm. In accordance with yet other embodiments, the protective layer 120 may be arranged on the solar radiation collection device with substantially no distance therebetween. The second electrode E₂ is arranged on the surface 120a of the layer with substantially no distance therebetween. The power supply (not shown) is connected between the first electrode E₁ and the second electrode E₂. In the embodiment of Fig. 6(b) the second electrode E₂ is arranged at a distance a₂ from the surface 120a of the protective layer 120. In accordance with the depicted embodiment the distance a₂ is less than 10cm. In accordance with other embodiments, however, the distance a₂ may also be more than 10 cm. In the embodiment of Fig. 6(c) the second electrode E₂ is arranged in the protective layer 120. The protective layer 120 has a thickness d, and the second electrode E₂ is arranged at a distance of less than d from the surface 120a of the protective layer 120. The second electrode E₂ may be arranged closer to one of the surfaces 120a, 120b of the protective layer 120 than to the other one of the surfaces 120a, 120b, or may be arranged in the center of the protective layer 120.

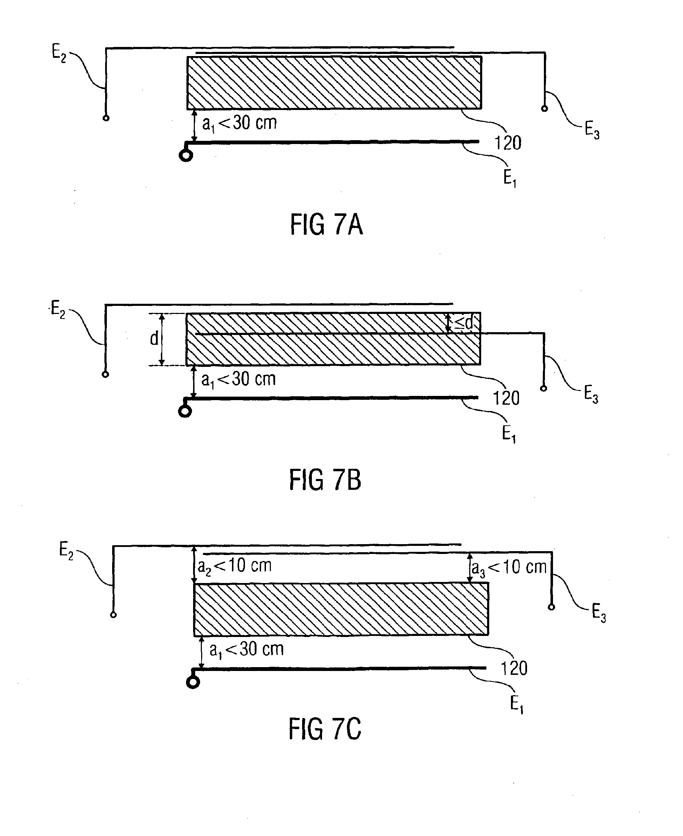

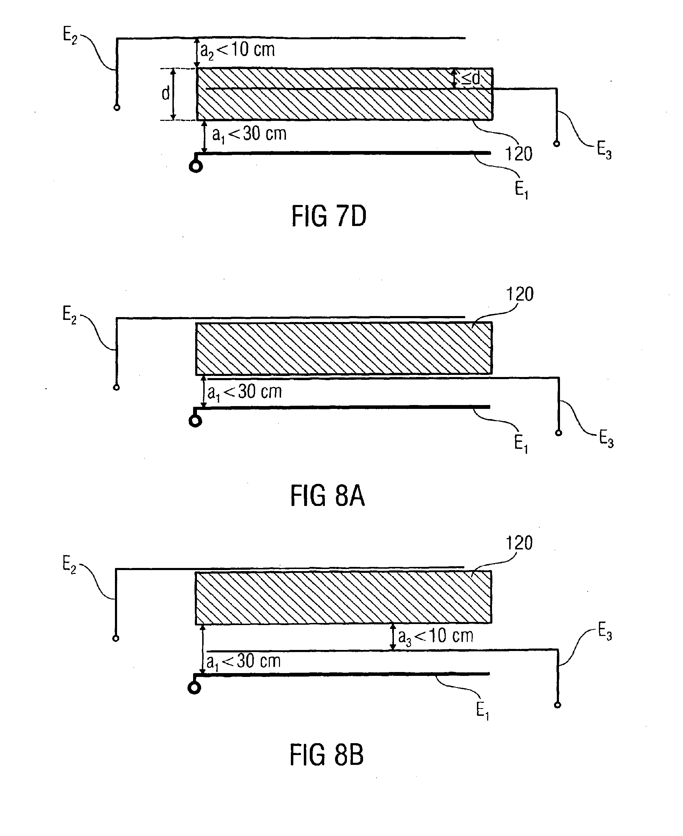

Fig. 7(a)-(d) show different configurations of three electrodes in accordance with embodiments of the invention. The embodiments of Fig. 7(a) and 7(b) are similar to the one of Fig. 6(a) except that an additional or third electrode E₃ is provided. In Fig. 7(a) the third electrode E₃ is arranged between the second electrode E₂ and the surface 120a of the protective layer 120. In Fig. 7(b) the third electrode E₃ is arranged inside protective layer 120 at a distance of less than d (thickness of the protective layer 120) from the surface 120a of the protective layer 120. The third electrode E₃ may be arranged closer to one of the surfaces 120a, 120b of the protective layer 120 or may be arranged in the center of the protective layer 120. The embodiments of Fig. 7(c) and 7(d) are similar to the one of Fig. 6(b) except that the additional or third electrode E₃ is provided. In Fig. 7(c) the third electrode E₃ is arranged between the second electrode E₂ and the surface 120a of the protective layer 120. The third electrode E₃ is arranged at a distance a₃ from the surface 120a of the protective layer 120. In accordance with the depicted embodiment the distance a₃ is less than 10cm. In accordance with other embodiments, however, the distance a₃ may also be more than 10 cm. The third electrode E₃ may be arranged such that it is closer to the second electrode E₂ than to the surface 120a of the protective layer 120. In other embodiments, the third electrode may be closer to the surface 120a of the protective layer 120 than to the second electrode. In Fig. 7(d) the third electrode E₃ is arranged inside protective layer 120 at a distance of less than d (thickness of the protective layer 120) from the surface 120a of the protective layer 120. The third electrode E₃ may be arranged closer to one of the surfaces 120a, 120b of the protective layer 120 or may be arranged in the center of the protective layer 120.

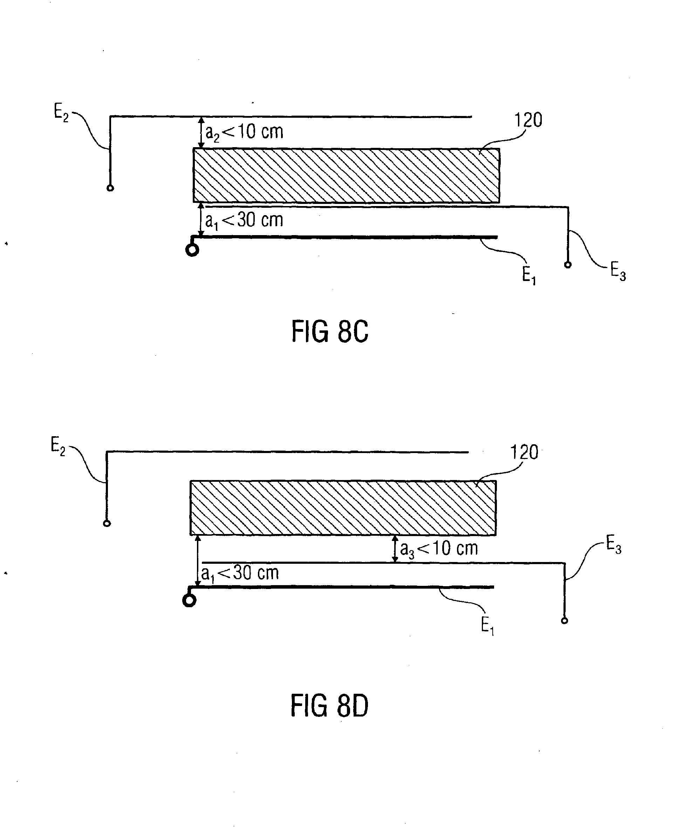

Fig. 8(a)-(d) show different configurations of three electrodes in accordance with further embodiments of the invention. The embodiments of Fig. 8(a) and 8(b) are similar to the one of Fig. 6(a) except that the additional or third electrode E₃ is provided. In Fig. 8(a) the third electrode E₃ is arranged between the first electrode E₁ and the surface 120b of the protective layer 120. The third electrode E₃ is arranged on the surface 120b of the protective layer 120 with substantially no distance therebetween. In Fig. 8(b) the third electrode E₃ is arranged at a distance a₃ from the surface 120b of the protective layer 120. In accordance with the depicted embodiment the distance a₃ is less than 10cm. In accordance with other embodiments, however, the distance a₃ may also be more than 10 cm. The third electrode E₃ may be arranged such that it is closer to the first electrode E₁ than to the surface 120b of the protective layer 120. In other embodiments, the third electrode E₃ may be closer to the surface 120b of the protective layer 120 than to the first electrode E₁. The embodiments of Fig. 8(c) and 8(d) are similar to the one of Fig. 6(b) except that the additional or third electrode E₃ is provided. In Fig. 8(c) the third electrode E₃ is arranged between the first electrode E₁ and the surface 120b of the protective layer 120. The third electrode E₃ is arranged on the surface 120b of the protective layer 120 with substantially no distance therebetween. In Fig. 8(d) the third electrode E₃ is arranged at a distance a₃ from the surface 120b of the protective layer 120. In accordance with the depicted embodiment the distance a₃ is less than 10cm. In accordance with other embodiments, however, the distance a₃ may also be more than 10 cm. The third electrode E₃ may be arranged such that it is closer to the first electrode E₁ than to the surface 120b of the protective layer 120. In other embodiments, the third electrode E₃ may be closer to the surface 120b of the protective layer 120 than to the first electrode E₁.

In the embodiments of Fig. 7 and 8 the power supply (not shown) is connected between the first electrode and the second electrode, and the third electrode is connected to a fixed potential. Alternatively, the power supply (not shown) is connected between the first electrode and the third electrode, and the second electrode is connected to a fixed potential

The inventive approach as described above allows for the prevention of dust accumulation and for the removal of dust from the surfaces of the described solar radiation collecting elements by means of the electrical field applied between the two electrodes, namely the first electrode formed by the additional conductive traces in the layer above the solar radiation collecting element by the already existing conductive structures inside the solar radiation collecting element. As a consequence of the electrical field, the dust particles are released from the surface and removed by electrostatic force. Removal may be supported by external influences, like wind or gravity. In general, the devices are arranged somehow tilted with respect to the horizontal orientation so that upon applying the electrical field the dust particles will start to slide off the panel surfaces due to the gravitational forces and the removed binding of the dust particle to the surface of the panel.

While embodiments of the invention have been described in accordance with which the layer fully covers the solar radiation collecting element, it is noted that the invention is not limited to such implementation. In accordance with other embodiments, the layer is arranged above the solar radiation collecting element and covers it at least in part.

While embodiments of the invention have been described in accordance with conductive traces arranged in parallel or as a grid, it is noted that the invention is not limited to such an implementation. Rather, any desired electrode structure may be used, e.g. the conductive traces may be formed in a zigzag shape or in a spiral shape. Also, the plurality of traces may extend in different directions.

The above described embodiments were related to the removal of dust particles from a photovoltaic panel, where airborne dust of mineral origin, which is a typical for contaminant for desert regions, was a subject of concern. Nevertheless, the invention is not limited to such an implementation, rather, also other particles or contaminants, different from the mineral dust, like powders of mineral or organic origin, pollen, coal, cement dusts, particles of fiberglass, resin, metals and the others, may be removed using the described inventive principle. Also, the inventive approach may be applied to other devices than a photovoltaic panel, e.g. to optical windows of CPV systems, on concentrating mirrors and pipe-lines of solar thermal power plants and other types of solar collectors and receivers.

Although some aspects have been described in the context of an apparatus, it is clear that these aspects also represent a description of the corresponding method, chere a block or device corresponds to a method step or a feature of a method step. Analogously, aspects described in the context of a method step also represent a description of a corresponding block or item or feature of a corrsponding apparatus.

The above described embodimets are merely illustrative for the principles of the present invention. It is understood that modifications and variations of the arrangements and the details described herein will be apparent to others skilled in the art. Is is the intent, therefore, to be limited only by the scope of the impending patent claims and not by the specific details presented by way of description and explanation of the embodiments herein.

## Claims

1. A device, comprising:
at least one element (102a-102c; 204; 304) for collecting solar radiation; and
a layer (120; 220; 320) arranged above the at least one element (102a-102c; 204; 304) and comprising a conductive structure (122a - 122i, 124; 122a - 122i, 124, 128a - 128e; 222a - 222d, 224; 322a - 322i, 324), **characterised in that**
the at least one element (102a-102c; 204; 304) is configured such that an electrical voltage can be applied between the conductive structure of the layer (120; 220; 320) and the at least one element (102a-102c; 204; 304), thereby generating an electrical field at the layer (120; 220; 320) for removing particles from the layer (120; 220; 320).

2. The device of claim 1, comprising a voltage generator (140; 240; 340) connected between the conductive structure of the layer (120; 220; 320) and the at least one element (102a-102c; 204; 304).

3. The device of claim or 2, wherein the voltage generator (140; 240; 340) is configured to generate a DC high voltage or an AC high voltage.

4. The device of one of claims 1 to 3, wherein
the element (102a-102c; 204) is configured to convert a solar radiation into an electrical power,
the element (102a-102c; 204) comprises a plurality of solar cells having respective terminals coupled via conductive elements (102a-102c, 106b; 206) to a common node (110; 210), and
the electrical voltage is applied between the conductive structure of the layer (120; 220) and the common node (110; 210).

5. The device of claim 4, wherein the layer (220) comprises an array of concentrating lenses (231) arranged at a distance from the solar cells (204), wherein the conductive structure comprises a plurality of conductive traces (222a - 222d) extending between or across the lenses (231).

6. The device of one of claims 1 to 3, wherein
the element comprises a solar collector comprising a reflective layer (304) formed of a conductive material, and
the electrical voltage is applied between the conductive structure (322a - 322i, 324) of the layer (320) and the reflective layer (304).

7. The device of one of claims 1 to 6 wherein
the conductive structure of the layer (120; 220; 320) comprises a plurality of conductive traces (122a - 122i, 128a - 128e; 222a - 222d; 322a - 322i),
the conductive traces are connected to a common node (126; 226; 326), and
the electrical voltage is applied between the common node (126; 226; 326) and the at least one element (102a-102c; 204; 304).

8. The device of one of claims 1 to 7, wherein the layer (120; 220; 320) substantially covers the at least one element (102a-102c; 204; 304).

9. The device of one of claims 1 to 8, comprising a cover (130; 230; 330) arranged on the layer (120; 220; 320).

10. The device of one of claims 1 to 9, comprising a support structure formed of a conductive material, wherein the electrical voltage is applied between the conductive structures of the layer (120; 220; 320) and the support structure.

11. The device of one of claims 1 to 10, wherein conductive elements (106a-106b, 108; 206, 208; 304) of the at least one element form a first electrode, and wherein the conductive structure of the layer (120; 220; 320) forms a second electrode.

12. The device of one of claims 1 to 11, comprising an additional conductive structure (132) formed on the layer (120) and arranged in a desired relationship with respect to the conductive structure (122), wherein the additional conductive structure (132) forms a third electrode connected to a reference potential, e.g. ground.

13. A method for removing particles from a surface of a device for collecting solar radiation, the method comprising:
generating an electrical field at the surface (120; 220; 320) of the device for collecting solar radiation,
wherein generating the electrical field comprises applying an electrical voltage between a first electrode and a second electrode,
wherein the first electrode is formed by at least one element for collecting solar radiation of the device for collecting solar radiation, and
wherein the second electrode is formed by a conductive structure (122, 124, 128, 222, 224, 322, 324) at the surface of a layer arranged above the at least one element of the device for collecting solar radiation.

14. The method of claim 13, wherein the device converts the solar radiation into electrical power and comprises a plurality of solar cells having a common node (110; 210), wherein the electrical voltage is applied between the common node (110; 210)and the second electrode.

15. The method of claim 13, wherein the device is a solar collector comprising a reflective layer (304) formed of a conductive material, wherein the electrical voltage is applied between the reflective layer (304) and the second electrode.

## Patentansprüche

1. Eine Vorrichtung, die folgende Merkmale aufweist:
zumindest ein Element (102a - 102c; 204; 304) zum Einfangen von Sonnenstrahlung; und
eine Schicht (120; 220; 320), die über dem zumindest einen Element (102a - 102c; 204; 304) angeordnet ist und eine leitfähige Struktur (122a - 122i, 124; 122a - 122i, 124, 128a - 128e; 222a - 222d, 224; 322a - 322i, 324) aufweist, **dadurch gekennzeichnet, dass**
das zumindest eine Element (102a - 102c; 204; 304) derart konfiguriert ist, dass eine elektrische Spannung zwischen die leitfähige Struktur der Schicht (120; 220; 320) und das zumindest eine Element (102a - 102c; 204; 304) angelegt werden kann, wodurch ein elektrisches Feld an der Schicht (120; 220; 320) zum Beseitigen von Partikeln von der Schicht (120; 220; 320) erzeugt wird.

2. Die Vorrichtung gemäß Anspruch 1, die einen Spannungsgenerator (140; 240; 340) aufweist, der zwischen die leitfähige Struktur der Schicht (120; 220; 320) und das zumindest eine Element (102a - 102c; 204; 304) geschaltet ist.

3. Die Vorrichtung gemäß Anspruch 2, bei der der Spannungsgenerator (140; 240; 340) dazu konfiguriert ist, eine Gleichstromhochspannung oder eine Wechselstromhochspannung zu erzeugen.

4. Die Vorrichtung gemäß einem der Ansprüche 1 bis 3, bei der
das Element (102a - 102c; 204) dazu konfiguriert ist, Sonnenstrahlung in elektrische Leistung umzuwandeln,
das Element (102a - 102c; 204) eine Mehrzahl von Solarzellen aufweist, die jeweilige Anschlüsse aufweisen, die über leitfähige Elemente (102a - 102c, 106b; 206) mit einem gemeinsamen Knoten (110; 210) gekoppelt sind, und
die elektrische Spannung zwischen die leitfähige Struktur der Schicht (120; 220) und den gemeinsamen Knoten (110; 210) angelegt wird.

5. Die Vorrichtung gemäß Anspruch 4, bei der die Schicht (220) ein Array von konzentrierenden Linsen (231) aufweist, die in einem Abstand von den Solarzellen (204) angeordnet sind, wobei die leitfähige Struktur eine Mehrzahl von Leiterbahnen (222a - 222d) aufweist, die sich zwischen den oder über die Linsen (231) hinweg erstrecken.

6. Die Vorrichtung gemäß einem der Ansprüche 1 bis 3, bei der
das Element einen Sonnenkollektor aufweist, der eine aus einem leitfähigen Material gebildete Reflexionsschicht (304) aufweist, und
die elektrische Spannung zwischen die leitfähige Struktur (322a - 322i, 324) der Schicht (320) und die Reflexionsschicht (304) angelegt wird.

7. Die Vorrichtung gemäß einem der Ansprüche 1 bis 6, bei der
die leitfähige Struktur der Schicht (120; 220; 320) eine Mehrzahl von Leiterbahnen (122a - 122i, 128a - 128e; 222a - 222d; 322a - 322i) aufweist,
die Leiterbahnen mit einem gemeinsamen Knoten (126; 226; 326) verbunden sind, und
die elektrische Spannung zwischen den gemeinsamen Knoten (126; 226; 326) und das zumindest eine Element (102a - 102c; 204; 304) angelegt wird.

8. Die Vorrichtung gemäß einem der Ansprüche 1 bis 7, bei der die Schicht (120; 220; 320) das zumindest eine Element (102a - 102c; 204; 304) im Wesentlichen bedeckt.

9. Die Vorrichtung gemäß einem der Ansprüche 1 bis 8, die eine Abdeckung (130; 230; 330) aufweist, die auf der Schicht (120; 220; 320) angeordnet ist.

10. Die Vorrichtung gemäß einem der Ansprüche 1 bis 9, die eine aus einem leitfähigen Material gebildete Trägerstruktur aufweist, wobei die elektrische Spannung zwischen die leitfähigen Strukturen der Schicht (120; 220; 320) und die Trägerstruktur angelegt wird.

11. Die Vorrichtung gemäß einem der Ansprüche 1 bis 10, bei der leitfähige Elemente (106a - 106b, 108; 206, 208; 304) des zumindest einen Elements eine erste Elektrode bilden und bei der die leitfähige Struktur der Schicht (120; 220; 320) eine zweite Elektrode bildet.

12. Die Vorrichtung gemäß einem der Ansprüche 1 bis 11, die eine zusätzliche leitfähige Struktur (132) aufweist, die auf der Schicht (120) gebildet und in einer gewünschten Beziehung bezüglich der leitfähigen Struktur (122) angeordnet ist, wobei die zusätzliche leitfähige Struktur (132) eine mit einem Referenzpotential, z. B. Masse, verbundene dritte Elektrode bildet.

13. Ein Verfahren zum Entfernen von Partikeln von einer Oberfläche einer Vorrichtung zum Einfangen von Sonnenstrahlung, wobei das Verfahren folgende Schritte aufweist:
Erzeugen eines elektrischen Feldes an der Oberfläche (120; 220; 320) der Vorrichtung zum Einfangen von Sonnenstrahlung,
wobei das Erzeugen des elektrischen Feldes ein Anlegen einer elektrischen Spannung zwischen eine erste Elektrode und eine zweite Elektrode aufweist,
wobei die erste Elektrode durch zumindest ein Element zum Einfangen von Sonnenstrahlung der Vorrichtung zum Einfangen von Sonnenstrahlung gebildet ist, und
wobei die zweite Elektrode durch eine leitfähige Struktur (122, 124, 128, 222, 224, 322, 324) an der Oberfläche einer Schicht gebildet ist, die über dem zumindest einen Element der Vorrichtung zum Einfangen von Sonnenstrahlung angeordnet ist.

14. Das Verfahren gemäß Anspruch 13, bei dem die Vorrichtung die Sonnenstrahlung in elektrische Leistung umwandelt und eine Mehrzahl von Solarzellen aufweist, die einen gemeinsamen Knoten (110; 210) aufweisen, wobei die elektrische Spannung zwischen den gemeinsamen Knoten (110; 210) und die zweite Elektrode angelegt wird.

15. Das Verfahren gemäß Anspruch 13, bei dem die Vorrichtung ein Sonnenkollektor ist, der eine aus einem leitfähigen Material gebildete Reflexionsschicht (304) aufweist, wobei die elektrische Spannung zwischen die Reflexionsschicht (304) und die zweite Elektrode angelegt wird.

## Revendications

1. Dispositif, comprenant:
au moins un élément (102a à 102c; 204; 304) destiné à collecter le rayonnement solaire; et
une couche (120; 220; 320) disposée au-dessus de l'au moins un élément (102a à 102c; 204; 304) et comprenant une structure conductrice (122a à 122i, 124; 122a à 122i, 124, 128a à 128e, 222a à 222d, 224; 322a à 322i, 324),
**caractérisé par le fait que**
l'au moins un élément (102a à 102c; 204; 304) est configuré de sorte qu'une tension électrique puisse être appliquée entre la structure conductrice de la couche (120; 220; 320) et l'au moins un élément (102a à 102c; 204; 304), générant ainsi un champ électrique à la couche (120; 220; 320), pour enlever les particules de la couche (120; 220; 320).

2. Dispositif selon la revendication 1, comprenant un générateur de tension (140; 240; 340) connecté entre la structure conductrice de la couche (120; 220; 320) et l'au moins un élément (102a à 102c; 204; 304).

3. Dispositif selon la revendication 1 ou 2, dans lequel le générateur de tension (140; 240; 340) est configuré pour générer un CC haute tension ou un CA haute tension.

4. Dispositif selon l'une des revendications 1 à 3, dans lequel
l'élément (102a à 102c; 204) est configuré pour convertir un rayonnement solaire en une énergie électrique,
l'élément (102a à 102c; 204) comprend une pluralité de cellules solaires présentant des bornes respectives couplées par l'intermédiaire d'éléments conducteurs (102a à 102c, 106b; 206) à un noeud commun (110; 210), et
la tension électrique est appliquée entre la structure conductrice de la couche (120; 220) et le noeud commun (110; 210).

5. Dispositif selon la revendication 4, dans lequel la couche (220) comprend un réseau de lentilles de concentration (231) disposé à une distance des cellules solaires (204), dans lequel la structure conductrice comprend une pluralité de traces conductrices (222a à 222d) s'étendant entre ou à travers les lentilles (231).

6. Dispositif selon l'une des revendications 1 à 3, dans lequel
l'élément comprend un collecteur solaire comprenant une couche réfléchissante (304) formée en un matériau conducteur, et
la tension électrique est appliquée entre la structure conductrice (322a à 322i, 324) de la couche (320) et la couche réfléchissante (304).

7. Dispositif selon l'une des revendications 1 à 6, dans lequel
la structure conductrice de la couche (120; 220; 320) comprend une pluralité de traces conductrices (122a à 122i, 128a à 128e; 222a à 222d; 322a à 322i),
les traces conductrices sont connectées à un noeud commun (126; 226; 326), et
la tension électrique est appliquée entre le noeud commun (126; 226; 326) et l'au moins un élément (102a à 102c; 204; 304).

8. Dispositif selon l'une des revendications 1 à 7, dans lequel la couche (120; 220; 320) recouvre substantiellement l'au moins un élément (102a à 102c; 204; 304).

9. Dispositif selon l'une des revendications 1 à 8, comprenant un couvercle (130; 230; 330) disposé sur la couche (120; 220; 320).

10. Dispositif selon l'une des revendications 1 à 9, comprenant une structure de support formée en un matériau conducteur, dans lequel la tension électrique est appliquée entre les structures conductrices de la couche (120; 220; 320) et la structure de support.

11. Dispositif selon l'une des revendications 1 à 10, dans lequel les éléments conducteurs (106a à 106b, 108; 206, 208; 304) de l'au moins un élément forment une première électrode, et dans lequel la structure conductrice de la couche (120; 220; 320) forme une deuxième électrode.

12. Dispositif selon l'une des revendications 1 à 11, comprenant une structure conductrice additionnelle (132) formée sur la couche (120) et disposée selon un rapport désiré avec la structure conductrice (122), dans lequel la structure conductrice additionnelle (132) forme une troisième électrode reliée à un potentiel de référence, par exemple, à la terre.

13. Procédé pour éliminer des particules d'une surface d'un dispositif pour collecter le rayonnement solaire, le procédé comprenant le fait de:
générer un champ électrique à la surface (120; 220; 320) du dispositif pour collecter le rayonnement solaire,
dans lequel la génération du champ électrique comprend le fait d'appliquer une tension électrique entre une première électrode et une deuxième électrode,
dans lequel la première électrode est formée par au moins un élément pour collecter le rayonnement solaire du dispositif pour collecter le rayonnement solaire, et
dans lequel la deuxième électrode est formée par une structure conductrice (122, 124, 128, 222, 224, 322, 324) à la surface d'une couche disposée au-dessus de l'au moins un élément du dispositif pour collecter le rayonnement solaire.

14. Procédé selon la revendication 13, dans lequel le dispositif convertit le rayonnement solaire en énergie électrique et comprend une pluralité de cellules solaires présentant un noeud commun (110; 210), dans lequel la tension électrique est appliquée entre le noeud commun (110; 210) et la deuxième électrode.

15. Procédé selon la revendication 13, dans lequel le dispositif est un collecteur solaire comprenant une couche réfléchissante (304) formée en un matériau conducteur, dans lequel la tension électrique est appliquée entre la couche réfléchissante (304) et la deuxième électrode.
